# EUROPÄISCHE PATENTANMELDUNG

(11) **EP 3 613 713 A1**
(43) Veröffentlichungstag der Anmeldung: **26.02.2020**
(21) Anmeldenummer: 19192218.6
(22) Anmeldetag: 19.08.2019
(51) Int. Cl.: C04B 18/16, B02C 4/00

(54) **VERFAHREN ZUR HERSTELLUNG EINES ZUSCHLAGSTOFFES FÜR BETON**

(30) Priorität: 21.08.2018 DE 102018120331
(71) Anmelder: KHD Humboldt Wedag GmbH, 51067 Köln (DE)
(72) Erfinder: Frangenberg, Meinhard, 51515 Kürten (DE)

(57) **Zusammenfassung**

Die Erfindung betrifft die Verwendung von Beton-Recyclat als Zuschlagstoff für Beton, ein Verfahren zur Herstellung desselben und den Zuschlagstoff selbst.

Erfindungsgemäß ist vorgesehen, dass das Beton-Recyclat zuvor in einer Hochdruckrollenpresse gebrochen worden ist, bei der in einer ersten Stufe das Beton-Recyclat in einer Schüttung durch Druckbeanspruchung gebrochen wird und agglomeriert und dann in einer zweiten Stufe die Agglomerate durch eine weitere mechanische Beanspruchung zerstört werden, wobei die Druckbeanspruchung in der ersten Stufe durch einmalige Pressung zwischen zwei Flächen mit über 50 MPa Druck erfolgt.

Der so hergestellte Zuschlagstoff aus Beton zeichnet sich aus durch eine homogene Korngrößenverteilung, in dem die unterschiedlichen Phasen nebeneinander vorliegen und in ihrer Gesamtheit eine höhere spezifische Oberfläche ausbilden als durch Hammermühlen und/oder mit Kegelbrechern hergestellte Zuschlagstoffe aus Abbruchbeton.

## Beschreibung

Die Erfindung betrifft die Verwendung von Beton-Recyclat als Zuschlagstoff für Beton, ein Verfahren zur Herstellung desselben und den Zuschlagstoff selbst.

Es ist bekannt, Beton-Recyclat aus Bauten-Abriss als Zuschlagstoff für neuen, frischen Beton zu nutzen. Ein idealer Zuschlagstoff für Beton bildet ein die Festigkeit des Betons nicht beeinflussendes Füllmittel, das durch das Bindemittel aus gemahlenem Zementklinker, Betonzusatzstoffen und Betonzusatzmitteln gebunden wird. Bei Beton unterscheidet man Zuschlagstoffe, Zusatzstoffe und Zusatzmittel. Betonzusatzstoffe beeinflussen das Abbindeverhalten des Betons und dessen rheologischen Eigenschaften. Die Betonzusatzstoffe sind im abbindenden Beton chemisch aktiv, wie beispielsweise Wasser. Bei der empirischen Untersuchung der Betonfestigkeit hat sich herausgestellt, dass Sand unterschiedlicher Provenienz als Zuschlagstoff tatsächlich einen sehr erheblichen Einfluss auf die Betonfestigkeit hat. Wenngleich die meisten Sandsorten, die als Betonzuschlagstoff genutzt werden, größtenteils aus Quarzbruch bestehen, so finden sich in verschiedenen Sandsorten auch Anteile von carbonathaltigem Gestein, wenn der Sand beispielsweise Strandsand ist, oder granit- oder basalthaltigem Gestein, wenn der Sand von Kiesgruben stammt. Die Sandprovenienz bestimmt also dessen chemische Zusammensetzung, die Korngrößenverteilung und auch die Kornform. Der weltweite Bedarf an Bausand als Zuschlagstoff für Beton ist groß. Sand steht als Wirtschaftsgut an dritter Stelle im weltweiten Verbrauch. Der weltweite Sandbedarf pro Jahr beträgt etwa 15 Milliarden Tonnen. Die knappen Reserven von als Zuschlagstoff geeignetem Sand führen dazu, dass Bausand mittlerweile mit Schiffen aus dem Meer gewonnen wird. Dazu wird der geeignete Sand mit Schiffen über große Meeresdistanzen transportiert.

Aufgabe der Erfindung ist es daher, eine Alternative für Bausand als Zuschlagstoff für Beton zur Verfügung zu stellen. Als Alternative bietet sich die Verwendung von Beton-Recyclat als Zuschlagstoff für Beton an. Ähnlich wie Sand unterschiedlicher Provenienz tatsächlich einen großen Einfluss auf die spätere Betonfestigkeit hat, so hat auch Beton-Recyclat in Abhängigkeit von dessen Herstellung einen erheblichen Einfluss auf die spätere Beton-Festigkeit.

Es ist bekannt, Beton-Recyclat als Zuschlagstoff für Beton zu nutzen. Beim Festbetonrecycling wird im Gegensatz zum Frischbetonrecycling bereits erhärteter, alter Beton aus Rückbaumaßnahmen bei der Beton-Herstellung im Betonwerk wiederverwendet. Dabei wird der Betonabbruch aus Bauwerken aufbereitet und erneut der Beton-Produktion zugeführt. Hierzu wird der Bruch-Beton zunächst zerkleinert und in einzelne Kornfraktionen getrennt, so dass Betonsplitt entsteht, der dann in der Herstellung des Frischbetons genutzt wird. Betonsplitt enthält neben der ursprünglichen natürlichen Gesteinskörnung immer auch einen Zementsteinanteil, der die Eigenschaften des Betons wie etwa Verarbeitbarkeit, Festigkeit, Verformungsverhalten und die Dauerhaftigkeit beeinflussen kann. Für den bisher bekannten Einsatz als Gesteinskörnung im Beton eignen sich in erster Linie die groben Fraktionen von rezykliertem Beton. Im Frischbeton bewirkt die rezyklierte Gesteinskörnung in der Regel einen geringfügig höheren Wasseranspruch. Dies muss beim Mischungsentwurf und bei der Herstellung beachtet werden. Im erhärteten Zustand besitzt der Recyclingbeton in Bezug auf seine Festigkeit nahezu dieselben Eigenschaften. Beton mit rezyklierter Gesteinskörnung weist jedoch gegenüber herkömmlich hergestelltem Beton andere Schwind- und Kriecheigenschaften auf. Beton, der gemäß der DAfStb-Richtlinie mit rezyklierter Gesteinskörnung hergestellt wurde, kann ohne weitere Maßnahmen unter trockenen Umgebungsbedingungen verwendet werden. Bei Einsatz in feuchter Umgebung werden zunächst genauere Untersuchungen an der im Festbeton verwendeten Gesteinskörnung vorgenommen, um die Dauerhaftigkeit des Betons sicherzustellen. Der beim Festbeton anfallende Betonbrechsand kann ebenfalls in ungebundenen Anwendungen Natursand ersetzen. Er kann aber auch als Sekundärrohstoff in der Portlandzementklinkerherstellung eingesetzt werden, wie neuere Untersuchungen untermauern (vgl. Heft 584 DAfStb), so trägt die Nutzung von Altbeton insgesamt zur Ressourceneffizienz im Bauwesen bei.

Der als Beton-Zuschlagstoff bekannte Betonsplitt hat eine Körnung im Bereich von 2 mm bis 8 mm mittlerem Korngrößendurchmesser und wird durch Brechen von Abbruchbeton gewonnen. Beim Brechen von Abbruchbeton trennt sich der ursprünglich als Betonzuschlagstoff eingesetzte Natursand, der mit anhaftendem und abgebundenem Zementklinker versehen ist, von Domänen aus Zementstein, abgebundenem Zementklinker, wobei der Zementstein als Granalien mit der zuvor angegebenen Korngrößenverteilung vorliegt. Diese Trennung von Zementsteingranalien und Betonbrechsand ist aber bei weitem nicht quantitativ, sondern der anfallende Betonbrechsand stellt nur einen Anteil des im Abbruchbeton verwendeten Natursands dar. Neben den Zementsteingranalien kommt in zerkleinertem Abbruchbeton auch Kiesbruch vor, wenn Kies als Zuschlagstoff im Abbruchbeton verwendet worden ist. Es ist festzuhalten, dass Beton-Recyclat sich beim Brechen teilweise in seine ursprünglichen Bestandteile auftrennt. Darum ist bei der Verwendung von Beton-Recyclat als Zuschlagstoff für neuen Beton sehr auf die Zusammensetzung des Beton-Recyclats zu achten, um die Qualität des neuen Betons vorhersagen zu können.

Im Rahmen der hier vorliegenden Erfindung wurde überraschend festgestellt, dass die Art der Herstellung des Beton-Recyclats einen erheblichen Einfluss auf die spätere Betonqualität des neuen, mit dem Beton-Recyclat hergestellten Frischbeton und den späteren abgebundenen Beton hat.

Erfindungsgemäß wird ein Verfahren zur Herstellung eines Zuschlagstoffes für Beton vorgeschlagen, welches dadurch gekennzeichnet ist, dass dieser durch Brechen von Beton-Recyclat in einer Hochdruckrollenpresse gewonnen worden ist, bei der in einer ersten Stufe das Beton-Recyclat in einer Schüttung durch Druckbeanspruchung gebrochen und agglomeriert wird und dann in einer zweiten Stufe die Agglomerate durch eine weitere mechanische Beanspruchung zerstört werden, wobei die Druckbeanspruchung in der ersten Stufe durch einmalige Pressung zwischen zwei Flächen mit über 50 MPa Druck erfolgt.

Hierzu ist es wichtig, die sehr stark unterschiedlichen Arten der Zerkleinerung zu unterscheiden. Als Zerkleinerungsmittel kommen prinzipiell drei Verfahren in Betracht, nämlich Scheren oder Reiben, Schlagen oder Pressen.

In Gesteinsmühlen wird Gestein im Wesentlichen durch Reiben oder Scheren zerkleinert. Wird Beton durch Scheren oder Reiben zerkleinert, so werden die im Beton unterschiedlichen Domänen von Kies, Natursand und Zementstein miteinander verrieben, wobei die unterschiedlichen Materialien Kies, Natursand und Zementstein unterschiedlich stark zerkleinert werden. Es kommt zu einem heterogenen Phasengemisch, das unterschiedliche Größenverteilungen für unterschiedliche Zusammensetzung einzelner Körner unterscheidet. Aus diesem Grund wird bisher der Betonsplitt als Beton-Recyclat bevorzugt, denn durch das Aussichten der feineren Bestandteile kommt es zu einer Homogenisierung der Splittphasen in Bezug auf Korngrößenverteilung und Zusammensetzung.

In Hammermühlen und Brechern, wie zum Beispiel Kegelbrechern, wird der grobe Abbruchbeton in Mischkörner zerschlagen oder gebrochen, in dem die unterschiedlichen Domänen, nämlich Sand, Kies und Zementstein fest aneinanderhaften. Beim Zerkleinern in einer Hammermühle oder in einem Brecher fällt als Nebenprodukt der Betonbrechsand an. Wird der Betonbrechsand aus dem in der Hammermühle bzw. in dem Brecher zerkleinerten Abbruchbeton entfernt, so ändert sich die Gesamtzusammensetzung des zerkleinerten Abbruchbetons gegenüber der Zusammensetzung des ursprünglichen und nicht zerkleinerten Abbruchbetons.

In Pressmühlen wird das zu zerkleinernde Gut im Idealfall ausschließlich durch Druck zerkleinert. Der Druck lässt das spröde Mahlgut unter Ausbildung von einer Vielzahl feiner Risse bersten. Das Mahlgut bildet nach der Druckbehandlung zunächst Agglomerate, sogenannte Schülpen, aus, die erst noch deagglomeriert werden müssen.

Die Art der Zerkleinerung in einer Mühle hat einen sehr erheblichen Einfluss auf die Korngrößenverteilung und auf die Kornform. Scherende und reibende Mühlen führen zu einer eher runden und gleichmäßigen Kornform mit eher geringer spezifischer Oberfläche. Bei Mahlgut mit heterogenen Phasen, wie es Abbruchbeton darstellt, werden die unterschiedlichen Phasen durch Verreiben miteinander vermischt und aneinandergedrückt, so dass sich Kleinstagglomerate des heterogenen Mahlguts aus unterschiedlichen Phasen bilden. Schlagende Mühlen führen zu einer Heterogenisierung des mehrphasigen Mahlguts. Pressmühlen hingegen führen zu einer sehr unregelmäßigen Kornform mit sehr hoher spezifischer Oberfläche und mit einer eher geringen Verreibung der unterschiedlichen Phasen des Mahlguts, das unterschiedliche Domänen aufweist, wie eben Abbruchbeton. In realen Mühlen finden die verschiedenen Zerkleinerungsarten nebeneinander statt, wobei jede Mühlenart unterschiedliche Ausprägung der verschiedenen Zerkleinerungsarten aufzeigt.

Eine besondere Mühle ist die sogenannte Hochdruckwalzenpresse. Die Hochdruckwalzenpresse wurde von Schönert et al. in der deutschen Patentanmeldung DE 27 08 053 erstmalig beschrieben. In dieser Hochdruckwalzenpresse wird Mahlgut durch einen Spalt zweier gegenläufig drehender Mahlwalzen gezogen, wobei im Walzenspalt der Schlupf der Mahlwalzen, also eine gegebenenfalls unterschiedlich hohe Umdrehungsgeschwindigkeit, durch entsprechende Regelung der Antriebe oder durch eine entsprechende Auslegung der Hochdruckwalzenpresse möglichst vermieden wird. Dadurch wird in einer Hochdruckwalzenpresse das Mahlgut fast ausschließlich durch Druck zerkleinert, ohne dass es zu Schlägen kommt oder zu einer Verreibung. Die Kornform eines Mahlguts aus einer Hochdruckwalzenpresse unterscheidet sich im Mikroskop sehr erheblich von der Kornform des Mahlguts aus anderen Mühlen. Die überraschende Erkenntnis ist nun, dass in einer Hochdruckwalzenpresse zerkleinerter Abbruchbeton, der selbst mehrphasig ist, weil dieser Zementstein-, Kies- und Natursandphasen aufweist, zu einem sehr stark zerklüfteten Korn führt, das bei vergleichbarer Korngrößenverteilung eine höhere spezifische Oberfläche aufweist als dies bei anderen Mühlen, wie Walzentellermühlen, Kollergänge, Vertikalmühlen oder Hammermühlen der Fall ist. Des Weiteren ist die Korngrößenverteilung der unterschiedlichen Phasen vergleichbar. Die unterschiedlichen Bestandteile reagieren trotz ihrer unterschiedlichen Sprödigkeit und Festigkeit mit einem ähnlichen Zerkleinerungsverhalten, so dass der durch eine Hochdruckwalzenpresse zerkleinerte und danach deagglomerierte Abbruchbeton als feiner Zuschlagstoff für Beton verwendet werden kann. Die höhere spezifische Oberfläche bietet dem frischen Zementklinker in dem neu zubereiteten Beton eine große Angriffsfläche zum Abbinden, so dass die Festigkeit des mit Abbruchbeton als Beton-Reyclat hergestellten Beton die Anforderungen an hochwertigem Baubeton erfüllt. Da sämtliche Phasen des Abbruchbetons genutzt werden können, ist die Ausbeute an Beton-Recyclat bei der Zerkleinerung in einer Hochdruck-Walzenpresse höher als bei anderen Zerkleinerungsarten, in denen ein vor allem ein Betonsplitt als grober Zuschlagstoff verwendet wird.

Beansprucht wird ein Verfahren zur Herstellung eines Zuschlagstoffes für Beton das dadurch gekennzeichnet ist, dass das Beton-Recyclat zuvor in einer Hochdruckrollenpresse gebrochen worden ist, bei der in einer ersten Stufe das Beton-Recyclat in einer Schüttung durch Druckbeanspruchung gebrochen wird und agglomeriert und dann in einer zweiten Stufe die Agglomerate durch eine weitere mechanische Beanspruchung zerstört werden, wobei die Druckbeanspruchung in der ersten Stufe durch einmalige Pressung zwischen zwei Flächen mit über 50 MPa Druck erfolgt. Dies ist die Art der Zerkleinerung nach Schönert et al. in der DE 27 08 053, wobei jedoch anstelle von homogenem Mahlgut Abbruchbeton als Mahlgut eingesetzt wird, der selber mehrphasig ist und wobei die unterschiedlichen miteinander verbundenen Phasen eine unterschiedliche Sprödigkeit und Festigkeit aufweisen. Dass die Mahlergebnisse on Schönert et al. auch auf ein mehrphasiges Mahlgut zutreffen, und dass dieser so hergestellte Zuschlagstoff geeignet ist für die Herstellung von neuem Beton, ist Gegenstand der hier beschriebenen Erfindung.

Um den Wasseranspruch des mit dem Beton-Recyclat hergestellten Frischbeton einzustellen, kann vorgesehen sein, dass eine erwünschte Körnung und Korngrößenverteilung, die bei Abbruchbeton als Beton-Zuschlagstoff Einfluss auf den Wasseranspruch hat, durch Windsichten und Mischen mit Beton-Recyclat verschiedener Beton-Recyclat-Mahlungen erhalten wurde.

Außer dem Mischen des Mahlguts verschiedener Mahlungen kommt zur Einstellung der Korngrößenverteilung auch in Betracht, dass das Beton-Recyclat im Umlauf zerkleinert wurde und das gebrochene Beton-Recyclat durch Sichten und/oder Sieben aus dem Umlauf aussortiert wurde.

Neben dem Verfahren zur Herstellung eines Zuschlagstoffes für Beton wird beansprucht die Verwendung von Beton-Recyclat als Zuschlagstoff für Beton, wobei das Beton-Recyclat zuvor in einer Hochdruckrollenpresse gebrochen worden ist, bei der in einer ersten Stufe das Beton-Recyclat in einer Schüttung durch Druckbeanspruchung gebrochen und agglomeriert wird und dann in einer zweiten Stufe die Agglomerate durch eine weitere mechanische Beanspruchung zerstört werden, wobei die Druckbeanspruchung in der ersten Stufe durch einmalige Pressung zwischen zwei Flächen mit über 50 MPa Druck erfolgt.

Schließlich wird ein Zuschlagstoff für Beton beansprucht dadurch gekennzeichnet, dass dieser durch Brechen von mit Beton-Recyclat in einer Hochdruckrollenpresse gewonnen worden ist bei der in einer ersten Stufe das Beton-Recyclat in einer Schüttung durch Druckbeanspruchung gebrochen wird und agglomeriert und dann in einer zweiten Stufe die Agglomerate durch eine weitere mechanische Beanspruchung zerstört werden, wobei die Druckbeanspruchung in der ersten Stufe durch einmalige Pressung zwischen zwei Flächen mit über 50 MPa Druck erfolgt.

Der so hergestellte Beton-Zuschlagstoff aus Abbruchbeton unterscheidet sich von bekanntem Zuschlagstoff aus Abbruchbeton dadurch, dass keine Auftrennung von Korngrößenfraktionen mit unterschiedlicher Zusammensetzung in dem Zuschlagstoff beobachtbar ist, sondern dass die Korngrößenverteilung der unterschiedlichen Phasen, Kies- und Natursand sowie Zementstein vergleichbar ist und dass die unterschiedlichen Phasen nicht verrieben sind, so dass auch die einzelnen Körner keine Mischphasenagglomerate bilden, in dem eine erste Phase mit einer zweiten Phase durch Agglomeratbildung miteinander verbunden ist. Der so hergestellte Zuschlagstoff aus Beton zeichnet sich aus durch eine homogene Korngrößenverteilung, in dem die unterschiedlichen Phasen nebeneinander vorliegen und in ihrer Gesamtheit eine höhere spezifische Oberfläche ausbilden als durch Hammermühlen und/oder mit Kegelbrechern hergestellte Zuschlagstoffe aus Abbruchbeton.

## Patentansprüche

1. Verwendung von Beton-Recyclat als Zuschlagstoff für Beton,
**dadurch gekennzeichnet, dass**
das Beton-Recyclat zuvor in einer Hochdruckrollenpresse gebrochen worden ist, bei der
- in einer ersten Stufe das Beton-Recyclat in einer Schüttung durch Druckbeanspruchung gebrochen wird und agglomeriert und dann
- in einer zweiten Stufe die Agglomerate durch eine weitere mechanische Beanspruchung zerstört werden,
wobei die Druckbeanspruchung in der ersten Stufe durch einmalige Pressung zwischen zwei Flächen mit über 50 MPa Druck erfolgt.

2. Verwendung von Beton-Recyclat als Zuschlagstoff für Beton nach Anspruch 1,
**dadurch gekennzeichnet, dass**
eine erwünschte Körnung und Korngrößenverteilung durch Windsichten und Mischen mit Beton-Recyclat verschiedener Beton-Recyclat-Mahlungen erhalten wurde.

3. Verwendung von Beton-Recyclat als Zuschlagstoff für Beton nach einem der Ansprüche 1 oder 2,
**dadurch gekennzeichnet, dass**
das Beton-Recyclat im Umlauf zerkleinert wurde und das gebrochene Beton-Recyclat durch Sichten und/oder Sieben aus dem Umlauf aussortiert wurde.

4. Verfahren zur Herstellung eines Zuschlagstoffes für Beton,
**dadurch gekennzeichnet, dass**
dieser durch Brechen von Beton-Recyclat in einer Hochdruckrollenpresse gewonnen worden ist, bei der
- in einer ersten Stufe das Beton-Recyclat in einer Schüttung durch Druckbeanspruchung gebrochen wird und agglomeriert und dann
- in einer zweiten Stufe die Agglomerate durch eine weitere mechanische Beanspruchung zerstört werden,
wobei die Druckbeanspruchung in der ersten Stufe durch einmalige Pressung zwischen zwei Flächen mit über 50 MPa Druck erfolgt.

5. Verfahren zur Herstellung eines Zuschlagstoffes für Beton nach Anspruch 4,
**dadurch gekennzeichnet, dass**
eine erwünschte Körnung und Korngrößenverteilung durch Windsichten und Mischen mit Beton-Recyclat verschiedener Beton-Recyclat-Mahlungen erhalten wird.

6. Verfahren zur Herstellung eines Zuschlagstoffes für Beton nach einem der Ansprüche 4 oder 5,
**dadurch gekennzeichnet, dass**
das mit Beton-Recyclat verschiedener Beton-Recyclat-Mahlungen im Umlauf zerkleinert wird und das gebrochene Beton-Recyclat durch Sichten und/oder Sieben aus dem Umlauf aussortiert wird.

7. Zuschlagstoff für Beton,
**dadurch gekennzeichnet, dass**
dieser durch Brechen von mit Beton-Recyclat in einer Hochdruckrollenpresse gewonnen worden ist bei der
- in einer ersten Stufe das Beton-Recyclat in einer Schüttung durch Druckbeanspruchung gebrochen wird und agglomeriert und dann
- in einer zweiten Stufe die Agglomerate durch eine weitere mechanische Beanspruchung zerstört werden,
wobei die Druckbeanspruchung in der ersten Stufe durch einmalige Pressung zwischen zwei Flächen mit über 50 MPa Druck erfolgt.
